# EUROPEAN PATENT APPLICATION

(11) **EP 4 503 317 A1**
(43) Date of publication of application: **05.02.2025**
(21) Application number: 23204912.2
(22) Date of filing: 20.10.2023
(51) Int. Cl.: H01M 50/531, H01M 50/536, H01M 50/538

(54) **METHOD OF AUTOMATICALLY CONNECTING ELECTRODE TABS FOR SECONDARY BATTERIES**

(30) Priority: 02.08.2023 KR 20230100835
(71) Applicant: Lee, Kye-seol, Seoul (KR)
(72) Inventor: Lee, Kye-seol, Seoul (KR)
(74) Representative: Wunderlich & Heim Patentanwälte PartG mbB

(57) **Abstract**

Disclosed is a method of automatically connecting electrode tabs for secondary batteries. A used electrode tab and a new electrode tab are connected to each other such that the electrode tabs come into contact with each other, a support die is located under the electrode tabs, punching tools are moved downwards from above, the electrode tabs are punched using the punching tools such that both ends of lower parts of the electrode tabs are bent downwards and spread outwards, the punching tools are moved upwards while the support die is moved, the electrode tabs are pressed using quadrangular pressing tools above and under the electrode tabs in the state in which holes are formed in a connection part of the electrode tabs such that the ends of the electrode tabs come into completely tight contact with the electrode tabs, whereby the electrode tabs are integrated at the connection part thereof.

## Description

### BACKGROUND OF THE INVENTION

### Field of the Invention

The present invention relates to a method of automatically connecting electrode tabs for secondary batteries, and more particularly to a method of automatically connecting electrode tabs for secondary batteries, wherein, when an electrode tab is used up and a new electrode tab is connected to the used electrode tab in a process of connecting electrode tabs to a secondary battery, two connection parts are punched in the state in which the used electrode tab and the new electrode tab are connected to each other in contact with each other, and the electrode tabs are pressed using pressing tools above and under the electrode tabs, whereby the electrode tabs are automatically connected to each other.

### Description of the Related Art

In general, a battery is a device that converts chemical energy into electrical energy through electrochemical reaction, and is broadly classified as a primary battery or a secondary battery. Among secondary batteries, which are capable of being charged and discharged, a lithium secondary battery, which has high voltage and high energy density, is currently receiving the most attention, and the lithium secondary battery is widely used as a small battery for information and communication devices, such as a mobile phone and a laptop computer.

In a method of manufacturing a conventional lithium secondary battery, a grid-shaped negative electrode current collector, a matrix film-shaped negative electrode, a matrix film-shaped separator, a matrix film-shaped positive electrode, and a grid-shaped positive electrode current collector are sequentially stacked, the elements are allowed to pass through a laminator to integrate the elements, and the elements are folded into a zigzag shape to form a desired structure.

The conventional lithium secondary battery manufactured using the above method is called a "continuous lithium secondary battery" because the electrodes are continuously connected, and has the advantage of simple tab processing because the electrodes are connected to each other, but damage to the electrodes occurs during a folding process.

Conventionally, in order to solve this problem, a plurality of negative electrode plates and a plurality of positive electrode plates are used. Since the plurality of negative electrode plates and the plurality of positive electrode plates are alternately stacked, the lithium secondary battery is called a "stacked lithium secondary battery". In this type of lithium secondary battery, no damage to the electrodes occurs during the folding process.

In the case of the stacked lithium secondary battery, however, efficient processing of a tab located at each of the plurality of negative electrode plates and the plurality of positive electrode plates is required, and it is particularly difficult to connect electrode tabs to each other.

That is, conventionally, an electrode tab is attached to a cylindrical secondary battery, and when the electrode tab is used up, a film is cut using a cutting machine, equipment is stopped, and the used electrode tab is connected to a new electrode tab in order to continuously use the electrode tab. At this time, the equipment is too large to connect the electrode tabs using a welding machine. Consequently, the electrode tabs are connected to each other using a stapler or a tape. In this case, however, a connection part is weak and the connection part is broken in the middle of use.

### [Prior Art Documents]

### [Patent Documents]

Korean Patent Application No. 10-2004-0082841
Korean Patent Application No. 10-2006-0076308
Korean Patent Application No. 10-2014-0103157

### SUMMARY OF THE INVENTION

The present invention has been made in view of the above problems, and it is an object of the present invention to provide a method of automatically connecting electrode tabs for secondary batteries, wherein, when an electrode tab is used up during connection of the electrode tab to a cylindrical secondary battery, the used electrode tab is cut off using a cutting machine, the used electrode tab and a new electrode tab are brought into contact with each other in order to connect the electrode tabs to each other, the electrode tabs are punched such that a hole is formed in the electrode tabs, the electrode tabs are pressed using pressing tools above and under the electrode tabs such that ends of the electrode tabs spread outwards come into completely tight contact with the electrode tabs, whereby the electrode tabs are connected to each other.

In accordance with the present invention, the above and other objects can be accomplished by the provision of a method of automatically connecting electrode tabs for secondary batteries, wherein a used electrode tab and a new electrode tab are connected to each other such that the electrode tabs come into contact with each other, a support die having a hole formed therein is located under the electrode tabs, a punching tool is moved downwards from above, the electrode tabs are punched using the punching tool such that both ends of lower parts of the electrode tabs are bent downwards and spread outwards, the punching tool is moved upwards while the support die under the electrode tabs is moved aside, the electrode tabs are pressed using quadrangular pressing tools configured to be moved by cylinders or the like above and under the electrode tabs in the state in which circular holes are formed in the electrode tabs such that the ends of the electrode tabs spread outwards come into completely tight contact with the electrode tabs, whereby the electrode tabs are integrated.

The punching tool may be cylindrical in shape, and a lower part of the punching tool may be pointed so as to have a quadrangular shape.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a perspective view showing that electrode tabs are connected to a cylindrical secondary battery according to the present invention;
FIG. 2 is a view showing electrode tabs according to the present invention;
FIGs. 3 to 5 are views showing punching and returning of a punching machine in the state in which the electrode tabs according to the present invention are connected to each other;
FIG. 6 is a view showing pressing using upper and lower pressing plates after punching in FIG. 5;
FIG. 7 is a sectional view showing the state in which electrode tabs are connected to each other in accordance with the present invention; and
FIG. 8 is a plan view showing an electrode tab connection state according to the present invention.

### DETAILED DESCRIPTION OF THE INVENTION

Hereinafter, an embodiment of the present invention will be described in detail with reference to the accompanying drawings.

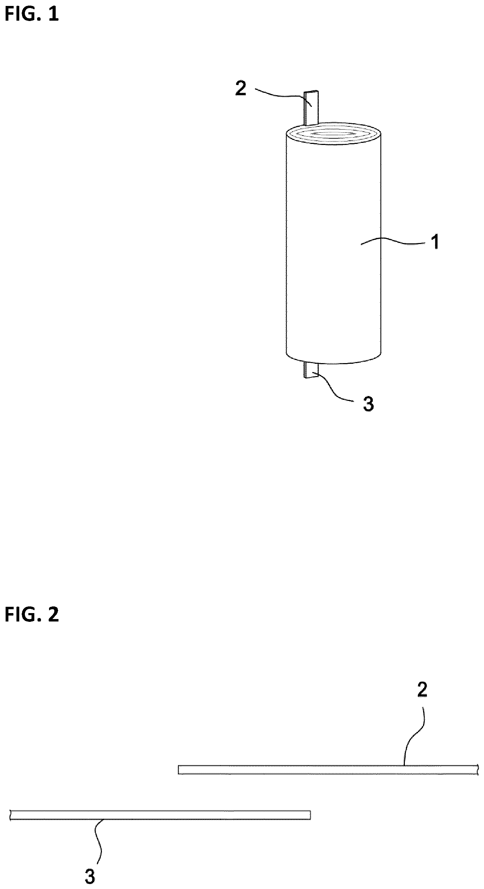

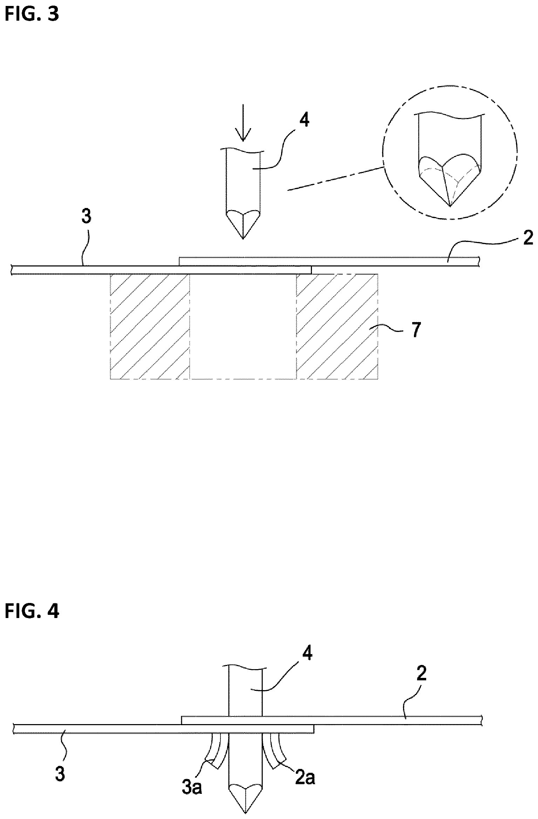

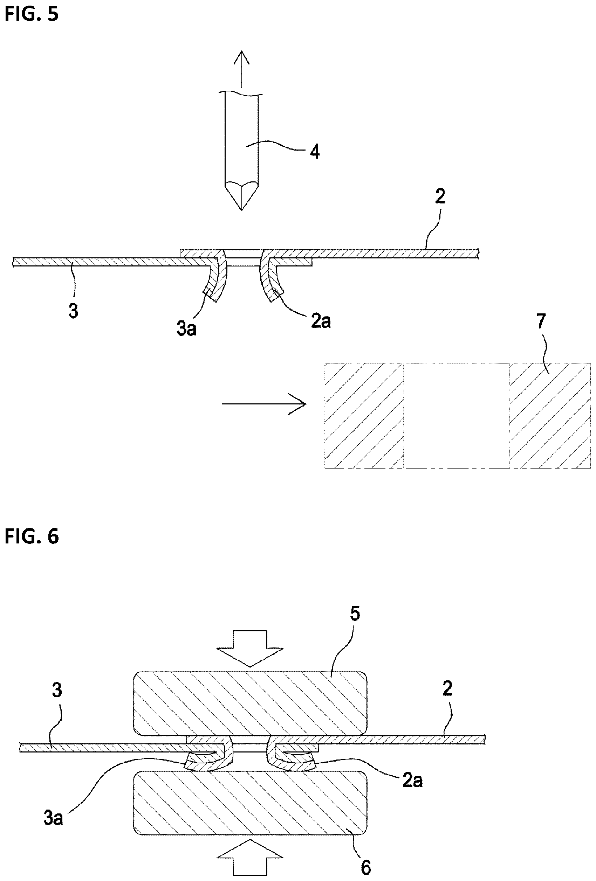

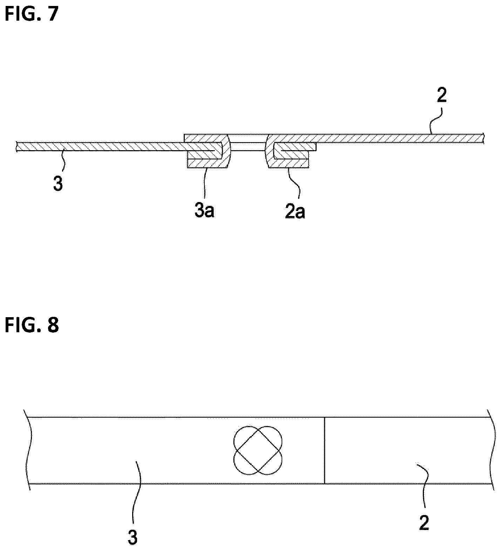

FIG. 1 is a perspective view showing that electrode tabs are connected to a cylindrical secondary battery according to the present invention, FIG. 2 is a view showing electrode tabs according to the present invention, FIGs. 3 to 5 are views showing punching and returning of a punching machine in the state in which the electrode tabs according to the present invention are connected to each other, FIG. 6 is a view showing pressing using upper and lower pressing plates after punching in FIG. 5, FIG. 7 is a sectional view showing the state in which electrode tabs are connected to each other in accordance with the present invention, and FIG. 8 is a plan view showing an electrode tab connection state according to the present invention. As shown, the cylindrical secondary battery 1 according to the present invention has electrode tabs wound on a cylinder, and each electrode tab is generally made of copper (Cu), aluminum (Al), nickel (Ni), etc. and has a thickness of about 0.3 mm.

First, when an electrode tab 2 for secondary batteries is used up, as shown in FIG. 2, a new electrode tab 3 wound on a cylinder is moved so as to come into contact with the electrode tab 2 in the state in which the electrode tab 2 is held, and the electrode tab 3 is connected to electrode tab 2. The present invention relates to a process of automatically connecting the electrode tab 2 and the electrode tab 3 to each other, wherein the electrode tabs 2 and 3 are connected to each other so as to come into contact with each other, and two punching tools 4 are moved downwards from above to punch two connection parts of the electrode tabs 2 and 3 in contact with each other in the state in which a support die 7 is located thereunder.

Here, the two connection parts of the electrode tabs 2 and 3 are punched in order to prevent the connection parts from shifting and becoming twisted.

Each of the punching tools 4 is cylindrical in shape, and a lower part thereof is pointed so as to have a quadrangular shape, whereby it is possible to easily punch the connection parts of the electrode tabs 2 and 3 such that holes are formed in the electrode tabs 2 and 3.

When the connection parts of the electrode tabs 2 and 3 are punched using the punching tools 4, therefore, ends 2a and 3a of lower parts of the electrode tabs 2 and 3 are bent downwards and spread outwards as the result of the electrode tabs 2 and 3 being punched, as shown in FIG. 4.

When holes are formed by punching the electrode tabs 2 and 3 in contact with each other, the punching tools 4 are moved upwards and the support die 7 under the electrode tabs 2 and 3 is moved aside, as shown in FIG. 5.

In addition, when the electrode tabs 2 and 3 are pressed using quadrangular pressing tools 5 and 6 configured to be moved by cylinders or the like above and under the electrode tabs 2 and 3 in the state in which two circular holes are formed in the electrode tabs 2 and 3, as shown in FIG. 6, the ends of the electrode tabs 2 and 3, which were spread outwards, are pressed by the pressing tools 5 and 6 so as to come into completely tight contact with the electrode tabs 2 and 3. As a result, the electrode tabs 2 and 3 are integrated, as shown in FIG. 7, and therefore the new electrode tab 3 may be continuously used.

Here, the punching tools 4 and the pressing tools 5 and 6 are set to be moved upwards and downwards by cylinders or the like.

FIG. 8 is a plan view showing the state in which connection between the electrode tabs 2 and 3 is completed, wherein the hole is formed so as to have a quadrangular shape by the punching tool 4 and the pressing tools 5 and 6.

Connection between the electrode tabs 2 and 3 is easily achieved through the process as described above. Afterwards, the connection parts are cut off and discarded, and the remaining clean electrode tab part without the connection parts is continuously used.

As is apparent from the above description, the present invention has the effect of, when connecting an electrode tab for secondary batteries to a new electrode tab after being used up, automatically connecting the used electrode tab and the new electrode tab to each other by punching the electrode tabs using a circular punching machine in the state in which the electrode tabs are in contact with each other and pressing the electrode tabs using pressing tools above and under the electrode tabs.

The present invention as described above is not limited to the above embodiment, and it will be appreciated that various embodiments can be usefully applied by a person having ordinary skill in the art to which the present invention pertains.

## Claims

1. A method of automatically connecting electrode tabs for secondary batteries, the method comprising:
a first step of connecting a used electrode tab and a new electrode tab to each other such that the electrode tabs come into contact with each other;
a second step of locating a support die under the electrode tabs in a state in which the electrode tabs are in contact with each other, moving a plurality of punching tools downwards from above, and punching the electrode tabs using the punching tools to form two circular holes in a connection part of the electrode tabs in contact with each other such that both ends of lower parts of the electrode tabs are bent downwards and spread outwards;
a third step of moving the punching tools upwards and moving the support die under the electrode tabs aside after the second step; and
a fourth step of pressing the electrode tabs using pressing tools configured to be moved by cylinders above and under the electrode tabs in a state in which the two circular holes are formed in the connection part of the electrode tabs such that the ends of the electrode tabs spread outwards come into completely tight contact with the electrode tabs, whereby the electrode tabs are integrated.

2. The method according to claim 1, wherein
each of the punching tools is cylindrical in shape, and
a lower part of each of the punching tools is pointed so as to have a quadrangular shape.
